# EUROPEAN PATENT APPLICATION

(11) **EP 1 674 515 A1**
(43) Date of publication of application: **28.06.2006**
(21) Application number: 05027256.6
(22) Date of filing: 14.12.2005
(51) Int. Cl.: C08K 5/25, C08K 5/24

(54) **Polyurethane molded article and production method thereof**

(30) Priority: 27.12.2004 JP 2004375415
(71) Applicant: Bayer MaterialScience AG, 51368 Leverkusen (DE)
(72) Inventor: Nakamura, Masafumi, Suita City Osaka Fu, 565-0853 (JP); Ikuta, Hiroshi, Amagasaki City Hyogo, 661-0035 (JP); Itaba, Hiroshi, Itami City Hyogo, 664-0003 (JP); Yoshihara, Hirokazu, Niihama City Ehime, 792-0025 (JP)

(57) **Abstract**

The amount of aldehyde emitted from a polyurethane and molded articles made of a polyurethane is reduced. The reduction of aldehyde emissions from polyurethanes is achieved by including a hydrazine compound as an aldehyde-scavenger in the polyol component of the polyurethane-forming reaction mixture. The hydrazine compound is used in an amount of 0.05 to 3.0 parts by weight, based on 100 parts by weight of the polyol mixture. Aldehyde emissions from molded polyurethane articles are reduced by including a hydrazine compound in the mold coating material in an amount of from 0.1 g/m² to 10 g/m².

## Description

### Field of the Invention

The present invention relates to a polyurethane molded article in which the evolution of formaldehyde and acetaldehyde is prevented as much as possible, and to a method for the production of such molded article.

### Background of the Invention

Polyurethane as a foam can be a flexible polyurethane foam, a rigid polyurethane foam, or a semi-rigid polyurethane foam, and it is used for various uses. Examples of uses for polyurethane foams include a cushion for furniture, various automobile uses (for example, interior equipment, such as a seat cushion, an arm rest, a steering wheel, a change knob, a ceiling material, an instrument panel, and a door trim structure material), a synthetic wood material, or a thermal insulation material.

According to the needs for the physical properties of an applicable field, reactivity, fabrication property, etc., the polyurethane can be obtained by mixing and reacting a polyisocyanate with a mixture (hereinafter referred to as "polyol mixture") of various polyols, catalysts, crosslinking agents, if necessary, foaming agents, surfactants, reinforcement agents, and other auxiliary agents.

When molding polyurethane to give a molded article, the polyisocyanate component is mixed with the polyol mixture in a ratio such that the number of isocyanate equivalents in the isocyanate component is approximately equal to the number of equivalents of the active hydrogen of an OH group, primary or secondary amine group, or water having the active hydrogen in the polyol mixture.

The problem of sick house syndrome originates from a volatile organic compound (VOC) which may be present in various plastics. Such problems are encountered with urea resins, melamine resins, phenol resins or polyacetal resins produced with formaldehyde, and particle boards used for building materials in which these resins are used as a binder.

With respect to the evolution of aldehydes such as formaldehyde and acetaldehyde, which are classified as toxic substances by WHO, a guideline of WHO or the Japanese Ministry of Health, Labor and Welfare shows that concentration standards of formaldehyde and acetaldehyde are 100 µg/m³ [0.08 ppm (vol/vol)] and 48 µg/m³ (0.03 ppm), respectively. For this reason, various studies for reducing the aldehyde concentration in habitation space are performed. A so-called aldehyde scavenger or an indoor deodorizer has been proposed (See, e.g., JP-A-10-298401, JP-A-10-36524, JP-A-11-299878, Japanese Patent Nos. 3431826 and 3400985, JP-A-2001-164089 and JP-A-2004-181045).

Since polyurethanes are not produced with aldehydes, they were not conventionally considered to be a source of aldehydes. The present inventors measured the aldehyde concentration (25° C) (containing acetaldehyde) by charging 60 g of various polyurethane foams (including rigid and flexible polyurethane foams) 3 days after molding into a 2L container, keeping it standing at 25° C for seven days and using a Kitagawa-type detecting tube for formaldehyde (No.171SC). The detected concentration of aldehydes was at maximum only 0.6 ppm. [The aldehyde evolution (in terms of formaldehyde) was 0.026 µg per 1 g of polyurethane foam.] Even if 6 kg of polyurethane foam are present in 10 m³ of the air in the state of sealing at 25° C, it corresponds to an aldehyde concentration of 0.01 ppm, and as long as the polyurethane foam is used at a normal temperature, it will be hard to consider polyurethane foam to be a source of evolution of aldehydes.

Usually, unlike the VOC problem of a construction use at ambient temperature, the polyurethane for an automobile is used under conditions which are significantly different from those of construction uses. Aldehyde evolution can result in a smell and/or eye irritation when a driver gets in a car that has been closed up and left standing in the summer heat long enough for the car interior to be at a high temperature.

The present inventors investigated an aldehyde emission amount at 65° C of various polyurethane foams (such as flexible and rigid polyurethane foams) three days after molding, in order to investigate whether polyurethane can cause aldehyde evolution at high temperatures. The quantity of formaldehyde and acetaldehyde emitted from a sample kept at 65° C for 2 hours into a 2L Tedlar bag sealed with nitrogen was measured. (Formaldehyde and acetaldehyde were captured in an aldehyde catching (DNPH) cartridge, and analyzed in a high performance liquid chromatography (HPLC).) Consequently, although the emission amount differed depending on a kind of polyurethane foam, the formaldehyde emission amount was in the range of from 0.04 to 0.35 µg/g or the acetaldehyde emission amount was in the range of from 0.05 to 0.15 µg/g, per 1 g of polyurethane foam. The emission amount of the aldehydes (total of formaldehyde and acetaldehyde) was from 0.07 to 0.45 µg/g.

The amount of aldehyde emitted changed according to the cell structure in polyurethane foam (air bubbles). We discovered that the amount of aldehyde emitted by a polyurethane foam having open cells (free passage air bubbles) is larger than the amount emitted by a polyurethane foam having closed cells (independent air bubbles). We discovered that a rigid polyurethane foam having open cell structure used for the interior of a car, particularly a ceiling material, emitted the largest amount of aldehyde per unit weight of the polyurethane foam.

### Summary of the Invention

It is an object of the present invention to decrease the amount of aldehydes (e.g., formaldehyde and acetaldehyde) emitted from molded polyurethane foam parts having an open cell content of at least 50% used in car interiors when a car remains closed for a period of time in a high temperature environment.

Since aldehydes may be generated from raw materials frequently used in the production of polyurethanes, it is another object of the present invention to provide a method for decreasing the amount of aldehydes such as formaldehyde and acetaldehyde emitted under high temperature from a polyurethane molded article without restricting the raw materials to be used in producing such polyurethane.

These and other objects which will be apparent to those skilled in the art are accomplished by including a specified amount of hydrazine compound in the polyol component used to produce the polyurethane or by including a specified amount of hydrazine compound in the surface layer or coating of a molded polyurethane article.

### Detailed Description of the Invention

The present invention is directed to polyurethane molded articles produced from a (a) polyisocyanate and (b) a polyol mixture which includes a polyol, a catalyst, a cross linking agent and, (c) from 0.05 to 3.0 parts by weight, based on 100 parts by weight of the polyol mixture, of a hydrazine compound which hydrazine compound is added to polyol mixture (b).

In another embodiment of the present invention, the aldehyde scavenger can be used also as an external additive, i.e., it can be added to the exterior of the polyurethane molded article. In this embodiment of the invention, the hydrazine compound is coated in an amount of 0.1 g/m² to 10 g/m² on a surface of the polyurethane molded article or a component of that article.

A polyurethane molded article which contains an aldehyde scavenger as an external additive can be manufactured as follows, for example.

A solution of a hydrazine compound in water having 0.1 to 10% of the weight of concentration is applied on the surface of the polyurethane article or a component of that article.

A polyurethane molded article may be prepared by applying a hydrazine compound on a mold surface together with a release agent before molding the polyurethane molded article.

After applying a hydrazine compound to an internal surface of a skin material and/or an external surface of a backing material, the skin material and/or backing material are placed in the mold, and a polyurethane raw material is fed to the mold and cast to give the polyurethane molded article.

In another embodiment of the present invention, a sheet-shaped polyurethane foam obtained by slicing a polyurethane slab is sandwiched between fibrous reinforcement textiles. A polyisocyanate together with a catalyst and water is used to mold the foam and textiles to form a sandwich-like reinforced polyurethane molded article. In the present invention, a hydrazine compound is added to the catalyst and water in an amount of from 0.1 parts by weight to 30 parts by weight per 100 parts by weight of the total of the catalyst and water.

When a paint forms the surface skin layer of a molded polyurethane article, paint containing from 1 to 10% by weight of a hydrazine compound is coated on the mold before the polyurethane molded article is molded.

The amount of emitted aldehyde generated from a polyurethane molded article can be significantly reduced by adding at least one hydrazine compound to the polyol mixture used to produce that polyurethane article.

Aldehydes emitted from a molded polyurethane article can be effectively trapped by coating the mold surface with a solution of at least one hydrazine compound or by adding the hydrazine compound to the mold release agent coated on the mold surface to transfer the mold release agent to the surface of polyurethane molded article. Generally, the amount of the aldehydes (the total of formaldehyde and acetaldehyde) emitted per 1 g of open cell polyurethane foam maintained at 65° C for 2 hours after the molding procedure is, at most, 0.10 µg/g at 3-7 days after molding.

The concentration of aldehydes (that is, formaldehyde and acetaldehyde) emitted for every two hour was measured with a Kitagawa type detecting tube for formaldehyde (No.171SC) by charging 10 g of a polyurethane foam (the foam was reinforced with a glass mat and molded by a heat press method) used for an automobile ceiling and having a relatively large amount of aldehyde emission, a low density (0.03 g/cm³) and an open cell structure (open cell (passage bubble) fraction of 50% to 90%; measured according to ASTM D 6226-98) into a 1L Tedlar bag (sealed with a nitrogen gas) and replacing the nitrogen gas every two hours. The initially detected aldehyde concentration of 2.5 ppm [corresponding to the emission amount, which is 0.3 µg/g, of aldehydes (the total of formaldehyde and acetaldehyde) (in terms of formaldehyde) emitted from 1 g of the polyurethane foam] was decreased to 0.6 ppm [corresponding to the emission amount of 0.07 µg/g, of aldehydes (the total of formaldehyde and acetaldehyde) (in terms of formaldehyde) emitted from 1 g of the polyurethane foam] after repeating the thermal history of 65° C for 2 hours seven times.

The accumulated emission amount (the total of formaldehyde and acetaldehyde) (in terms of formaldehyde) of aldehydes after repeating the thermal history of 2 hours at 65° C seven times was 1.0 ppm per 1 g of the rigid polyurethane foam. Although the emission amount of aldehydes at 65° C from this rigid polyurethane foam decreases from the initial value during the subsequent heating periods, the conduct of this thermal history requires many man-hours and much expense.

The concentration of the aldehydes (formaldehyde and acetaldehyde), emitted by the rigid polyurethane foam as measured by a Kitagawa detecting tube for formaldehyde (No.171SC) was identical with the result obtained by trapping the aldehyde in a DNPH cartridge and then analyzing by HPLC. Therefore, the present inventors confirmed that the Kitagawa detecting tube for formaldehyde (No.171SC) is effective in measurement of the aldehyde concentration of formaldehyde and acetaldehyde.

Since the raw materials for polyurethane are fluids, the present inventors first studied the possibility of eliminating aldehyde from these raw materials.

Various polyisocyanates, polyols, catalysts, crosslinking agents, etc., which are used for making polyurethane moldings were analyzed. The concentration of the aldehydes in each material was measured by the HPLC method.

It was believed that an amine used as a catalyst, especially a tertiary amine (e.g., pentamethyldiethylene triamine, dimethyl ethanol amine, and bisdimethylamino-ethyl ether); or an amine used as a crosslinking agent, especially alkanol amines (e.g., diethanol amine and triethanol amine); or a short chain polyether polyol (a molecular weight of, for example, 200 to 1,000) manufactured using, as a starting material of the polyol, a primary amine (e.g., ethylene diamine); or a polyester polyol (a molecular weight of, for example, 200 to 1,000) might contain the formaldehyde or acetaldehyde in an amount which exceeds 2 to 100 ppm.

The aldehydes were not detected in polyisocyanate in an amount more than the lower limit (1 ppm) of analysis measurement.

The content of aldehydes contained in the polyol mixture formulated for the rigid and flexible polyurethane foams having open cell structure which contains the amine catalyst, crosslinking agent and polyol component was measured by the HPLC method. It was found that the concentration of formaldehyde and acetaldehyde of some polyol mixtures reaches 10 ppm and 12 ppm, respectively, according to the formulation.

Next, a substance, which seems to react with the aldehydes in the polyol mixture for the rigid and flexible polyurethane foam having open cell structure to trap the aldehyde before the formation of the foam, was mixed with the polyol mixture to give a blend, and then 40 g of the blend was charged into 1 L can and heated at 65° C for 1 hour. Then the concentration of the aldehydes was investigated by the Kitagawa detecting tube for formaldehyde. The polyurethane foam was prepared from the substance having the capture effect of aldehyde found by the addition to the polyol mixture. Aldehydes emitted from the polyurethane foam were investigated and an effective aldehyde scavenger was discovered. Among the possible aldehyde scavengers investigated were those listed below.
- a): Activated carbon and silicate adsorbents which had no effect on aldehyde emissions from polyurethanes.
- b): Those scavengers disclosed in JP-A-52-5782 for the treatment of casein plastics, urea and an ammonium salt which had no effect with respect to polyurethane.

- c): The ammonia disclosed in JP-A-07-025990 for treatment of phenol resin binder which had no effect with respect to polyurethane and left an undesirable smell.
- d): The hydrazo compound disclosed in JP-A-2000-80246, JP-A-2000-80247 and JP-A-2000-344998 for treatment of polyacetal and thermoplastic resin.
However, some of the hydrazo compound does not dissolve in the polyol and many hydrazo compounds do not exhibit the aldehyde absorption property even if dissolved in the polyol.
- e): The amines, ureas, amides, imides, hydrazides, azoles and azines disclosed in JP-A-2000-169757 for general use as an aldehyde chemical adsorption agent for indoor paint and wall material for interiors. However, in the case of polyurethanes, the amine is a source of aldehyde. The ureas, amides, imides, azoles and azines did not have the desired effect. We discovered that the hydrazides which are not specified for the use for polyurethane resin did have the desired effect.
- f): The combination of a hydrazine and a surfactant is disclosed as an aldehyde scavenger in a wood material in JP-A-2004-189824 and JP-A-2004-141222. Although there is a statement for general use, use for polyurethanes is not described.
- g): Hydrazine is added to a thermoplastic resin packing material which generates aldehyde in the disclosure of JP-A-10-36524. The urethane resin is included in the thermoplastic resin. However, when a polyoxymethylene resin, a polyvinyl acetal resin, a phenol resin or an aminoaldehyde resin, which seems to generate the aldehydes, is stored at a high temperature, the emitted aldehyde smell is enclosed in a film of a thermoplastic resin containing a hydrazide group or a hydrazono group to decrease the stimulation of aldehyde smell. The concentration of aldehydes, the target, the object and the use method are different between this publication and the present invention directed to the polyurethane resin.

The above information and results indicate that, formaldehyde and acetaldehyde can easily be generated by chemical degradation, and that, if formaldehyde and acetaldehyde are present in an amount larger than a set level (for example, several ten mg unit of aldehyde), various absorbents can fix formaldehyde and acetaldehyde by a chemical reaction since formaldehyde and acetaldehyde are highly active chemical compounds. All chemical reactions are significantly affected by the concentrations of substances present. In the case of the polyurethanes of the present which have very low concentrations of aldehydes, the aldehyde scavenger effect exhibited seems to be relatively limited.

From the above results, the present inventors confirmed that the aldehyde scavenger (also referred to as an "additive") exhibiting the effect of decreasing the aldehyde emission of the polyurethane by addition to the raw materials is limited to a hydrazine compound. The present inventors have discovered an aldehyde scavenger which can be used with raw materials of the polyurethane and a method for measuring the aldehyde decrease in the polyurethane.

When adding the hydrazine compound as an aldehyde scavenger in the raw materials for polyurethane, since the aldehyde in the polyisocyanate which is a raw material is below the lower limit (1 ppm) of analysis measurement and since the aldehyde has the property of reacting with the polyisocyanate, it is not advantageous that the aldehyde scavenger be added to the polyisocyanate which is a raw material. Since the source of aldehyde is a polyol mixture which is a raw material, it is advantageous that the aldehyde scavenger be added to the polyol mixture side. It is preferred that the aldehyde scavenger be added to the polyol mixture beforehand to catch the aldehyde in the polyol mixture. Since the hydrazine compound remaining after the addition to the polyol raw materials and the aldehyde is fixed to the polyurethane molded article at the time of molding the polyurethane molded article, there is desirably no adverse effect that the hydrazine compound oozes out or evaporates to cause skin contact with a user or an odor emission.
The amount of the hydrazine compound added into the polyol mixture before reaction with the polyisocyanate may be from 0.05 to 3.0 parts by weight, preferably from 0.1 to 2.0 parts by weight, more preferably 0.1 to 1.5 parts by weight, based on 100 parts by weight of the polyol mixture. If the amount of hydrazine compound addition is less than 0.05 parts by weight, the scavenger effect is poor. If the amount of hydrazine compound addition is more than 3.0 parts by weight, the physical properties of the product are poor. For example, contraction at the time of cooling the polyurethane foam molded article is caused.

The polyol mixture, to which the hydrazine compound is added, is preferably stirred in the temperature range of 20° C to 90° C, preferably 40° C to 70° C, for at least 5 minutes, preferably for at least 60 minutes, for the purpose of aldehyde capture, although the conditions change with the addition amount of hydrazine compound and the aldehyde content in a polyol mixture.

When preparing a polyol mixture which has a high aldehyde content, the hydrazine compound may be previously added in the amount of 1 to 30 parts by weight, preferably 3 to 20 parts by weight, based on 100 parts by weight of the polyol mixture, to for example, the tertiary amine catalyst, the alkanol amine which is used as a crosslinking agent, the short chain polyether polyol manufactured by using the primary amine as a starting material, or the polyester polyol to be included in the polyol component from which the polyurethane will be produced.

The object of the present invention is to prevent the problem that goods (molded articles) manufactured from polyurethane may emit the aldehydes during use.

External addition of the hydrazine compound to a polyurethane molded article to reduce the emission amount of aldehyde is also within the scope of the present invention.

The hydrazine compound may be applied directly to the molded polyurethane article to reduce the amount of aldehyde generated and emitted from that molded polyurethane article. In determining what chemical substance is most suitable for coating the polyurethane article and what amount is externally applied for preventing the emission of aldehyde from the molded article, it is important to consider the length of time over which emission it to be prevented. It is also important to consider that even if the chemical substance has the effect of catching the aldehydes, the chemical substance may not be suitable if it has strong smell or a high vapor pressure.

If the emission amount of an aldehyde (the total of formaldehyde and acetaldehyde) (in terms of formaldehyde conversion) is at most about 1.0 µg/(1g polyurethane foam), the aldehyde emitted from a polyurethane molded article can be sufficiently and continuously absorbed by applying a very small amount of the aldehyde scavenger near the surface of the molded article.

To determine if external addition of the aldehyde scavenger adequately limits aldehyde emission, the following points should be considered.
- i): The effect the aldehyde scavenger has with respect to skin stimulus and the like on the human body during production. An aldehyde scavenger which shows the capture effect of aldehyde when used in a very small quantity is preferred so that quantity of handled aldehyde scavenger can be small.

- ii): The particular aldehydes which may be emitted. A low molecular weight chain-like hydrazine compound shows excellent adsorption effect on not only formaldehyde but also on acetaldehyde. The molecular weight of the low molecular weight chain-like hydrazine compound is, for example, from 32 to 400, especially from 50 to 200. Examples of suitable low molecular weight chain-like hydrazine compounds are hydrazine hydrate, carbonic acid hydrazine, phenylhydrazine, and 2-hydroxyethylhydrazine or a hydrazine having a hydrazine equivalent of at most 200. More preferable are hydrazides such as carbo(di)hydrazide, acetic acid hydrazide, succinic acid dihydrazide, and adipic acid dihydrazide.
The hydrazine equivalent of the hydrazine compound referred to herein is the number resulting from dividing the molecular weight of the hydrazine compound by the number of the hydrazine groups (namely, a -N₂H₄ group, a -N₂H₃ group and a -N-NH₂ group) in the hydrazine compound.
- iii): What solvent will be used. When applying hydrazine hydrate, phenylhydrazine, carbonic acid hydrazine or the preferred hydrazide compounds, various solvents may be used. The use of water or ethanol is preferable. Water is more preferable. Even when the scavenger dissolved in water is impregnated to some extent into the open cell of polyurethane foam, there is little influence on the effect, and water will evaporate and the thin film of an aldehyde scavenger will remain on the surface of polyurethane foam.
In the solution of the aldehyde scavenger to be used, the amount of the aldehyde scavenger may be from 0.1 to 10.0 parts by weight, preferably from 0.1 to 5.0 parts by weight, based on 100 parts by weight of the solvent (especially water).

- iv): Whether a surface active agent will be used. In order to uniformly coat the aldehyde scavenger dissolved in water on the molded article surface without repellency, the addition of a surface-active agent to water is more effective. The amount of the surface-active agent may be at most 10 parts by weight, preferably, from 0.05 to 5.0 parts by weight, most preferably from 0.2 to 3.0 parts by weight, based on 100 parts by weight of water.
The surface-active agent may be any of those known to be useful for producing polyurethane foams. The surface-active agent may be a nonionic surface-active agent or an ionic surfactant.
- v): If there are other elements of the molded article to which the aldehyde scavenger may be applied. In order for the aldehyde scavenger to work effectively, it does not necessarily need to be applied a directly to the polyurethane foam part surface, It is necessary that the aldehyde scavenger be relatively uniformly present near the surface of the polyurethane molded article. The amount of the hydrazine compound as the required aldehyde scavenger applied on the surface of an element of the polyurethane molded article is from 0.1 g/m² to 10g/ m², preferably from 0.3 g/ m² to 5.0 g/m².

The elements from which the polyurethane molded article are produced may include:
a polyurethane foam part (a), and
if necessary,
a skin layer (b) on an external surface of the polyurethane foam part,
an adhesives layer (c) and/or a reinforcement layer (d) between the polyurethane foam part (a) and the skin layer (b), and
a backing layer (e) on an internal surface of the polyurethane foam part (a).

In the external addition, the aldehyde scavenger is applied to at least one surface selected from the internal and external surfaces of the polyurethane foam part (a), the skin layer (b), the adhesives layer (c), the reinforcement layer (d), and the backing layer (e).

When molding polyurethane, in order to apply an aldehyde scavenger to members other than a polyurethane foam part with a sufficient manufacturing efficiency, various methods were studied. These are discussed below.

In one method, the aldehyde scavenger is mixed with the release agent used in the polyurethane molding, and the mixture of the aldehyde scavenger and release agent is applied to a mold.

In another method, the aldehyde scavenger is mixed with an "in-mold-coating agent" and the resultant mixture is applied on an internal surface of the mold.

In spite of the fact that hydrazine compounds react with polyisocyanates, it was surprisingly discovered that addition of the aldehyde scavenger to water and catalyst is effective, when a polyisocyanate (e.g., diphenylmethane diisocyanate) adhesive is coated on the reinforcement material and the compression molding is conducted in the following manner. A thermally moldable polyurethane foam cut into a sheet, a reinforcement material positioned on the polyurethane sheet, and skin material together with a thermosetting adhesive are stacked. The adhesive is then cured in a mold heated to the temperature between 80° C and 150° C to prepare, e.g., an automobile interior having a sandwich structure such as that described in JP-A-2001-47544. The reason that the aldehyde scavenger is effective in spite of the presence of the isocyanate adhesive is not clear. It is possible that the hydrazine compound coated on the polyurethane foam catches the aldehydes emitted from the polyurethane foam when the reinforcement material having the polyisocyanate coating and the polyurethane foam having the coating of the aldehyde scavenger added to water and catalyst are compression cured. During compression cure of the adhesive, the temperature may be from 80° C to 150° C, preferably 100° C to 140° C, and the compression cure time may be from 10 seconds to 100 seconds, preferably from 20 seconds to 60 seconds. The amount of the hydrazine compound added to water and the catalyst may be from 0.1 parts by weight in 30 parts by weight, based on 100 parts by weight of the total of water and the catalyst. The amount of the hydrazine compound coated on the polyurethane foam varies depending on the amount of the aldehyde emitted from polyurethane foam and the concentration of the hydrazine compound. Suitable amounts of hydrazine compound are from 0.1 g/m² to 10 g/m².

Thus, even when the aldehyde scavenger is coated on or the aldehyde scavenger is previously dissolved in a coating applied to a component of the molded article such as a skin or a skin having backing material, when the surface of the polyurethane foam is molded together with the reinforcement material, the adhesive and/or a retention part to form a molded article having a sandwich structure, the reduction of aldehyde emissions is achieved. The sufficient effect can be obtained also by mixing the aldehyde scavenger with a mold release agent which is used to facilitate demolding of the molded article from the mold coated with a mixture containing the aldehyde scavenger and the mold release agent.

The aldehyde scavenger used in the present invention is a hydrazine compound. The hydrazine compound is hydrazine or any of its derivatives, as well as hydrazide compounds. Generally, the hydrazine compound is a compound which has a hydrazine group (for example, a -N₂H₄ group, a -N₂H₃ group, and a -N-NH₂ group).

Examples of hydrazine and its derivatives include: alkyl hydrazines, for example, C₁₋₁₀ alkyl hydrazine, such as methyl hydrazine, dimethyl hydrazine and ethyl hydrazine; aryl hydrazines, for example, C₆₋₁₄ aryl hydrazine, such as hydrazinobenzene and hydrazinotoluene; hydrazinocarboxylic acids, for example, carbamic acid, hydrazino acetic acid, alpha-hydrazino propionic acid, alpha-hydrazino isobutyric acid and hydrazino benzoic acid; carbonic acid hydrazine, hydrazine sulfate, phosphoric acid hydrazine, hydrochloride hydrazine, or hydrazine hydrate (referred to as "hydration hydrazine") having crystal water, a hydrazide compound, and hydrazones.

The alkyl hydrazines can be produced by, for example the reaction between hydrazine and alkyl iodide. The aryl hydrazines can be produced by, for example, reducing a diazonium salt of aromatic hydrocarbon with a tin chloride, hydrochloric acid and the like. The hydrazino carboxylic acids can be obtained by, for example, reducing isonitroamino carboxylic acid with sodium amalgam etc.

The hydrazide compound can be selected from compounds which have at least one hydrazide group in molecule. For example, a monohydrazide compound which has one hydrazide group in molecule, a dihydrazide compound which has two hydrazide groups in molecule, the polyhydrazide compounds which have at least three hydrazide groups in molecule, or mixtures thereof can be mentioned.

As an example of the monohydrazide, mentioned is a monohydrazide compound of the general formula (1):

R-CO-NHNH₂ (1)

wherein R represents a hydrogen atom, an alkyl group, or an aryl group optionally having a substitution group.

Examples of the alkyl group represented by R in the above-mentioned general formula (1) include a straight chain alkyl group having 1 to 12 carbon atoms such as a methyl group, an ethyl group, a n-propyl group, a n-butyl group, a n-pentyl group, n-hexyl group, n-heptyl group, n-octyl group, n-nonyl group, n-decyl group and n-undecyl group. Examples of the aryl group include a phenyl group, a biphenyl group and a naphthyl group. Examples of the substitution group in the aryl group include a hydroxyl group, and a halogen atom such as fluoride, chlorine and bromine, and a straight chain or branched chain alkyl group having 1 to 4 carbon atoms such as a methyl group, an ethyl group, a n-propyl group, an isopropyl group, n-butyl group, a tert-butyl group and an isobutyl group.

Examples of the monohydrazide compound include lauric acid hydrazide, salicylic acid hydrazide, formhydrazide, acetohydrazide, propionic acid hydrazide, p-hydroxybenzoic acid hydrazide, naphthoic acid hydrazide and 3-hydroxy-2-naphthoic acid hydrazide.

As an example of a dihydrazide compound, mentioned is a dihydrazide compound of the general formula (2):

H₂NHN-X-NHNH₂ (2)

wherein X represents a -CO- group or a -CO-A-CO- group, and

A represents an alkylene group or an arylene group.

Examples of the alkylene group represented by A in the above-mentioned general formula (2) include a straight chain or branched chain alkylene group having 1 to 12 carbon atoms such as a methylene group, an ethylene group, a trimethylene group, a tetramethylene group, a pentamethylene group, a hexamethylene group, a heptamethylene group, an octamethylene group, a nonamethylene group, a decamethylenee group and an undecamethylene group. The alkylene group may have a substitution group and examples of the substitution group include a hydroxyl group. Examples of the arylene group include a phenylene group, a biphenylene group, a naphthylene group, the anthoracene group, a phenanthorene group.

Examples of the dihydrazide compound include dibasic acid dihydrazides, such as carbodihydrazide generated by the reaction of a carbonic acid and hydrazine, oxalic acid dihydrazide, malonic acid dihydrazide, succinic acid dihydrazide, adipic acid dihydrazide, azelaic acid dihydrazide, sebacic acid dihydrazide, dodecane diacid dihydrazide, maleic acid dihydrazide, fumaric acid dihydrazide, diglycolic acid dihydrazide, tartaric acid dihydrazide, malic acid dihydrazide, isophthalic acid dihydrazide, terephthalic acid dihydrazide, dimer acid dihydrazide and 2,6-naphthoic acid dihydrazide. Various basic acid dihydrazide compounds described in JP-B-02-4607, and 2,4-dihydrazino-6-methylamino-sym-triazine are also suitable.

An example of a suitable polyhydrazide compound is a polyacrylic acid hydrazide.

The hydrazine compound can be used alone or in combination of two or more hydrazine compounds.

A preferred hydrazine compound is a hydrazine compound having a hydrazine equivalent of at most 200, preferably at most 100, most preferably, from 50 to 100. The hydrazine compound preferably has a chain structure. When the hydrazine equivalent is at most 200 and the chain structure is possessed, the hydrazine compound has high reactivity with the aldehydes to have good capture of the aldehyde. The aldehyde capture effect is increased because the hydrazine compound easily dissolves in a polyol mixture or a specified polyol component, and easily dissolves in water used as a solvent in the coating on the polyurethane molded article. In addition, workability becomes high.

Particularly preferred hydrazine compounds are hydrazine hydrate, carbonic acid hydrazine, phenylhydrazine, 2-hydroxyethyl hydrazine, carbo(di)hydrazide, acetic acid hydrazide, adipic acid dihydrazide, and succinic acid dihydrazide. These hydrazine compounds dissolve in the polyol.

The present invention is directed to various polyurethanes, including rigid polyurethanes, flexible polyurethanes, and semi-rigid polyurethanes. For example, the present invention can be used for a polyurethane produced from a polyol component having an amine group as a terminal active group and in which a portion or almost all parts of the polyurethane contains a urea linkage and not a urethane linkage. The polyurethane molded articles to which the present invention relates include expanded foams, non-expanded molded articles, soft elastomers, and rigid bodies.

The polyisocyanates suitable for use in the practice of the present invention include: diphenyl methane diisocyanate, polymethylene polyphenyl polyisocyanate, toluene diisocyanate, hexamethylene diisocyanate, isophorone diisocyanate, modified polyisocyanates resulting from modifying these polyisocyanates such as urethane-modified, allophanate-modified, carbodiimide-modified or isocyanurate-modified polyisocyanate, and mixtures thereof.

Examples of suitable polyols for use in the practice of the present invention include: hydroxyl group-containing compounds, such as propylene glycol, diethylene glycol, glycerin, trimethylol propane, pentaerythritol, sorbitol and sucrose; compounds containing an amino group and a hydroxyl group, such as triethanol amine, and diethanol amine; and polyether polyols having 2 to 6 hydroxyl groups in a molecule and an average hydroxyl group equivalent of 100 to 3000, prepared by adding alkylene oxide such as ethylene oxide and propylene oxide to an amino group containing compounds such as ethylene diamine and diaminotoluene.

It is also possible to use a polyester polyol prepared from a polycarboxylic acid and a low molecular weight hydroxyl group-containing compound, a lactone-based polyester prepared by ring-open polymerization of caprolactone, a polycarbonate polyol, a polytetramethylene glycol prepared by ring-open polymerization of tetrahydrofuran, and/or a polyether polyamine prepared by aminating a hydroxyl group of the polyether polyol or hydrolyzing an isocyanate prepolymer of a polyether polyol, any of which have an average active hydrogen equivalent weight of from 100 to 3000.

Examples of catalysts suitable for use in the practice of the present invention include: tertiary amines such as triethylene diamine, pentamethyl diethylene triamine, 1, 8 diazabicyclo-5,4,0-undecene-7, dimethylamino ethanol, dimethyl ethanol amine, tetramethylethylene diamine, dimethyl benzyl amine, tetramethyl hexamethlenediamine, bis(2-dimethylaminoethyl) ether; and organic metallic compounds such dibutyltin dilaurate and octanoic acid tin, and dibutyltin diacetate.

Examples of crosslinking agents suitable for use in the practice of the present invention include: dihydric alcohols having a molecular weight of from 62 to 300 such as ethylene glycol, butane diol, hexane diol, neopentyl glycol, diethylene glycol, triethylene glycol, polyethylene glycol, dipropylene glycol and polypropylene glycol; alkanol amines such as diethanol amine and triethanol amine; aromatic diamines such as diethyltolueneamine, t-butyltoluenediamine, diethyldiaminobenzene, triethyldiaminobenzene and Tetraethyldiaminodiphenylmethane; and polyether polyols prepared by adding alkylene oxide to these such as those described in, for example, JP-A-54-17359, JP-A-57-74325, JP-A-63-47726 and JP-A-01-34527.

Examples of optional auxiliary agents useful in the practice of the present invention include: foam stabilizers such as a silicone surfactant; surface-active agents; compatibilizing agents; weathering agents, for example, antioxidants; ultraviolet absorption agents; stabilizers such as 2,6-di-t-butyl-4-methylphenol and tetrakis[methylene 3-(3',5'-di-t-butyl-4-hydroxyphenyl) propionate]methane; and colorants. Suitable reinforcement materials include fibers such as glass fibers, any inorganic fibers and mineral fibers, e.g., a milled glass fiber and a wallastonite fiber, or flakes, for example, mica and a glass flake, etc. Any auxiliary agent is usually added to a polyol mixture.

Blowing agents useful in the practice of the present invention include: liquid carbon dioxide; a low boiling point liquid such as hydrocarbon, pentane, cyclopentane; fluorinated hydrocarbon, for example, HCFC 141b, HFC 245fa, HFC 365mfc; water; and mixtures thereof. The specific blowing agent(s) used are selected on the basis of the desired product properties and/or the specifications of the equipment being used.

It is possible to use a mixture of an organic acid such as carbonate of an amine compound or formic acid with a polyol.

The polyurethane molded articles produced in accordance with the present invention have aldehyde emissions of at most 0.10 micro g, preferably at most 0.07 micro g per 1g of the polyurethane molded article, at a temperature of 65 degrees C for 2 hours after 3 to 7 days from the molding, whether the aldehyde scavenger is added to the polyol mixture before molding or it is applied to an element of the polyurethane molded article.

The capture effect of the aldehydes (a decrease of emission amount of the aldehyde from no addition of the aldehyde scavenger) is from 30 % to 90%, preferably, from 50 to 70%.

Not only in the molded article but also in the polyurethane foam prepared by free rises blowing, the capture effect of aldehyde is obtained as in the molded article thereby reducing the amount of aldehyde emitted.

### Examples

Hereafter, the present invention is illustrated by the showings made in the following Examples and Comparative Examples. In the following examples, "parts" and "%" are "parts by weight" and "% by weight", unless otherwise specified.
The measurement of the aldehyde concentration (formaldehyde and acetaldehyde) was carried out at three days after production of the molded article of polyurethane foam or polyurethane foam.

### Reference Example 1

1 kg of a polyol mixture (Polyol A) was obtained by mixing of a) 28 parts of a polyether polyol having a hydroxyl value of 28 mg KOH/g (prepared by addition polymerization of propylene oxide and ethylene oxide (a mole ratio of propylene oxide with ethylene oxide is 5 : 1) with glycerin); b) 25 parts of polyether polyol having a hydroxyl value of 550 mg KOH/g (prepared by addition polymerization of propylene oxide with trimethylolpropane (TMP)); c) 25 parts of polyether polyol having a hydroxyl value of 290 mg KOH/g [which is commercially available under the name Desmophen P293 from Sumika Bayer Urethane Co., Ltd.)]; d) 8.4 parts of polyethyleneglycol having a hydroxyl value of 185 mg KOH/g; e) 6.5 parts of glycerin; f) 4.7 parts of water; g) 0.4 parts of dimethylethanol amine; and h) 2 parts of a surfactant (a polyoxyalkylene silicon copolymer).

1 kg of Polyol A and 1.7 kg of modified polymethylene polyphenyl polyisocyanate (NCO content: 32.0%, viscosity: 50 mPas/25° C) in a mixing ratio of 100: 170 were mixed. 1.8 kg of the mixture was then foamed (foaming into the mold without cover) to give a free rise rigid polyurethane foam which was approximately 40 cm square having an open cell ratio of 70% and a density of 0.03 g/cm³. The rise time was 3 minutes.

### Reference Example 2

20 kg polyol mixture (Polyol B) was obtained by mixing: a) 45 parts of polyether polyol having a hydroxyl value of 870 mg KOH/g (prepared by addition polymerization of propylene oxide with trimethylolpropane); b) 34.8 parts of polyether polyol having a hydroxyl value of 28 mg KOH/g (prepared by addition polymerization of propylene oxide and ethylene oxide (mole ratio of propylene oxide to ethylene oxide is 6 : 1) with propylene glycol); c) 9 parts of ethylene glycol; d) 0.6 parts of water; e) 8 parts of acid-amide (amide modified tall oil) as a compatibilizing agent; f) 0.9 parts of each of Kaolizer No.3 (a tertiary amine catalyst manufactured by Kao Corporation) and Toyocat TF (a tertiary amine catalyst manufactured by Tosoh Corporation); and g) 1.4 parts of a surfactant (a polyoxyalkylene silicon copolymer).

20 kg of Polyol B and 20 kg of low viscosity polymethylene polyphenyl polyisocyanate (NCO content: 32.0%, viscosity: 100 mPas/25° C) were put in a tank of a Polyurethane molding machine HK270 manufactured by Hennecke Co., Ltd and mixed. The mixing ratio of Polyol B to low viscosity polymethylene polyphenyl polyisocyanate was adjusted to a 100:150 by weight ratio and the mixture was introduced (by a RIM process) into a mold measuring 30 cm wide by 60 cm long and maintained at 60° C to produce a rigid polyurethane article with a density of 0.5 g/cm³ of density measuring 30 cm wide, 60 cm long and 7 mm thick. The mold used was coated with 15 g/m² of water emulsion type release agent (30 % aqueous solution of RIMRIKEI J860 manufactured by Chukyo Yushi Co., Ltd.) prior to introduction of the polyurethane-forming reaction mixture.

### Reference Example 3

500 g polyol mixture (Polyol C) was obtained by mixing: a) 54 parts of polyether polyol having a hydroxyl value of 35 mg KOH/g (prepared by addition polymerization of propylene oxide and ethylene oxide (a mole ratio of propylene oxide to ethylene oxide is 5 : 1) with glycerin); b) 36 parts of polymer polyol having a hydroxyl value of 20 mg KOH/g and containing 43% of polymer component (styrene acrylonitrile); c) 3 parts of polyether polyol having a hydroxyl value of 500 mg KOH/g (prepared by addition polymerization of propylene oxide with triethanolamine); d) 4.0 parts of polyether polyol having a hydroxyl value of 60 mg KOH/g (prepared by addition polymerization of propylene oxide with ethylene diamine); e) 0.5 parts of diethyltoluene diamine; f) 1.0 parts of 33% dipropylene (glycol) solution of triethylene diamine (a tertiary amine catalyst); g) 1.6 parts of water; and h) 1 part of a surfactant (a polyoxyalkylene silicon copolymer).

250 g of Polyol C and 90 g of polymethylene polyphenyl polyisocyanate (NCO content: 31.5 %, viscosity: 190 mPas/25° C) were mixed and a semi-rigid polyurethane foam article with a density of 0.2 g/cm³ of density was obtained by casting the mixture in a mold which was 30 cm wide, 55 cm long and 10 mm thick and which was maintained at a temperature of 60° C.

### Comparative Example 1

10 g of the rigid polyurethane foam produced in accordance with Reference Example 1 were put in 1 L of a nitrogen sealed Tedlar bag and were stored in that bag for 2 hrs at 65° C. Thereafter, the Tedlar bag was retuned to room temperature (25° C) and aldehyde concentration (formaldehyde and acetaldehyde) in the Tedlar bag was measured using Kitagawa system detecting tube (No.171SC) for aldehyde analysis. As a result, the detected aldehyde concentration was 2.5 ppm and emission quantity (in terms of formaldehyde) of aldehyde (total of formaldehyde and acetaldehyde) per 1 g of the rigid polyurethane foam was 0.30 µg/g.

### Comparative Example 2

40 g of rigid polyurethane foam produced in accordance with Reference Example 2 were put in 2 L of a nitrogen sealed Tedlar bag and stored for 2 hrs under 65° C. Thereafter the Tedlar bag was retuned to room temperature (25° C) and aldehyde concentration (formaldehyde and acetaldehyde) in the Tedlar bag was measured using Kitagawa system detecting tube (No.171SC) for aldehyde analysis. As a result, the detected aldehyde concentration was 2.6 ppm and emission quantity (in terms of formaldehyde) of aldehyde (total of formaldehyde and acetaldehyde) per 1 g of rigid polyurethane foam was calculated as 0.16 µg / g.

### Comparative Example 3

### Process 1):

18 g/m² of low viscosity polymethylene polyphenyl polyisocyanate was sprayed onto a chipped strand glass mat with basis weight: 100 g/m² of basis weight (NEC Glass Co., Ltd).

### Process 2):

A rigid polyurethane foam prepared in accordance with Reference Example 1 was cut to obtain a sheet 33 cm wide x 33 cm long x 5.5 mm thick. 15 g/m² of water containing 4% of dimethylethanol amine was sprayed on both sides of the cut sheet.

### Process 3):

The chipped strand glass mat which was prepared in Process 1 was separately set on both sides of a rigid polyurethane foam prepared in accordance with Process 2 and then non-woven fabric made from polyester (weight of per unit area = 50 g/m²) was separately set on both sides. Thereafter, a 4 mm thick sandwich-type article was prepared by pressing for 20 sec. under pressure (pressure: 10 bar) using a flat metal mold at 130° C.

After 3 days, 10 g of sample was cut and removed from the article, was put in a 2 L nitrogen sealed Tedlar bag and was stored for 2 hrs at 65° C. Thereafter the analysis [of aldehyde concentration] was done by HPLC after collection in a DNPH cartridge.

The result was that 0.09 µg of formaldehyde per 1 g of the sandwich type article and 0.07 µg of acetaldehyde per 1 g of the sandwich type article were emitted. Incidentally, the total emission quantity of aldehyde (total of formaldehyde and acetaldehyde) in terms of formaldehyde was 0.14 µg/g.

### Comparative Example 4

40 g of a semi-rigid polyurethane foam article which was molded in accordance with Reference Example 3 were cut and removed, put in a 2 L nitrogen sealed Tedlar bag and stored for 2 hrs at 65° C. Thereafter, the aldehyde concentration (formaldehyde and acetaldehyde) in the Tedlar bag was measured using a Kitagawa system detecting tube (No.171SC) for aldehyde analysis. As a result, the detected aldehyde concentration was 2.5 ppm and emission quantity (in terms of formaldehyde) of aldehyde (total of formaldehyde and acetaldehyde) per 1 g of semi rigid polyurethane foam was calculated as 0.15 µg / g.

### Comparative Example 5

35 g (3.5%) of carbohydrazide was added to 1 kg of Polyol A which was prepared by the same procedure as was used in Reference Example 1 and the mixture was mixed for 60 minutes at 60° C. After retuning to room temperature, a rigid polyurethane foam was prepared by the method of Reference Example 1. When the rigid polyurethane foam had cooled for one day, the polyurethane foam (article) was remarkably deformed due to temporary shrinkage. Additionally, the foam cells were coarse and the article could not be used.

### Example 1

15 g (1.5%) carbohydrazide were added to 1 kg of Polyol A which was prepared by the same procedure described in Reference Example 1 and the mixture was mixed for 60 minutes at 60° C. After returning to room temperature, a rigid polyurethane foam was prepared by the same method described in Reference Example 1. The aldehyde concentration (formaldehyde and acetaldehyde) was measured by the same procedure and under the same conditions used in Comparative Example 1. As a result, the detected aldehyde concentration was 0.45 ppm and emission quantity (in terms of formaldehyde) of aldehyde (total of formaldehyde and acetaldehyde) per 1 g of rigid polyurethane foam was 0.09 µg / g. The decrease in emitted aldehyde from that of the foam of Comparative Example 1 was 70%.

### Example 2

1.0% of carbohydrazide was added to Polyol B which was prepared by the same procedure described in Reference Example 2 and the mixture was mixed for 60 minutes at 60° C. After returning to room temperature, the rigid polyurethane foam was prepared by the same method described in Reference Example 2. The aldehyde concentration (formaldehyde and acetaldehyde) was measured using a Kitagawa system detecting tube (No.171SC) for aldehyde analysis by the same procedure and under the same conditions described in Comparative Example 2. As a result, the detected aldehyde concentration was 0.8 ppm and emission quantity (in terms of formaldehyde) of aldehyde (total of formaldehyde and acetaldehyde) per 1 g of rigid polyurethane foam was 0.05 µg / g. The decrease in emitted aldehyde from that of the foam of Comparative Example 2 was 70%.

### Example 3

1.0% of acetyl acid hydrazide was added to Polyol C which was prepared by the same procedure described in Reference Example 3 and the mixture was mixed for 60 minutes at 60° C. After returning to room temperature, a semi-rigid polyurethane foam was prepared by the same method described in Reference Example 3. The semi-rigid polyurethane foam was put in a 2 L nitrogen sealed Tedlar bag and was stored for 2 hrs under 65° C. Aldehyde concentration (formaldehyde and acetaldehyde) was then measured in the Tedlar bag using a Kitagawa system detecting tube (No.171SC) for aldehyde analysis by the same procedure used in Comparative Example 4. As a result, the detected aldehyde concentration was 1.0 ppm and emission quantity (in terms of formaldehyde) of aldehyde (total of formaldehyde and acetaldehyde) per 1 g of semi rigid polyurethane foam was calculated as 0.06 µg / g. The decrease in emitted aldehyde from that of the foam produced in Comparative Example 4 was 60%.

### Example 4

0.2 % of hydrazine hydrate was added Polyol C which was prepared by the same procedure described in Reference Example 3 and the mixture was mixed for 60 minutes at 60° C. After returning to room temperature, a semi-rigid polyurethane foam was prepared by the same method described in Reference Example 3. The semi-rigid polyurethane foam was put in a 2 L nitrogen sealed Tedlar bag and was stored for 2 hrs under 65° C. The aldehyde concentration (formaldehyde and acetaldehyde) in the Tedlar bag was then measured using a Kitagawa system detecting tube (No.171SC) for aldehyde analysis by the same procedure described in Comparative Example 4. As a result, the detected aldehyde concentration was 1.0 ppm and emission quantity (in terms of formaldehyde) aldehyde (total of formaldehyde and acetaldehyde) per 1 g of semi rigid polyurethane was calculated as 0.06 µg / g. The decrease in emitted aldehyde from that of the foam of Comparative Example 4 (which was 0.15 µg / g) was 60%.

### Example 5

Processes 1, 2 and 3 described in Comparative Example 3 were repeated with the same materials with exception that 1.3% of adipic acid dihydrazide as an aldehyde scavenger added to a 4% dimethylethanol amine water solution and then 15 g/m² quantity of the solution was sprayed on both sides of the rigid polyurethane foam in Process 2.

The measurement of aldehyde concentration was done by the same procedure used in Comparative Example 3. The emitted formaldehyde was 0.02 µg per 1 g of the sandwich type article and acetaldehyde was 0.04 µg per 1 g of the sandwich type article. These measurements were remarkably reduced from Comparative Example 3. The reduction of formaldehyde was 78%, the reduction of acetaldehyde was 43% and the reduction of both aldehydes was 61%.
Incidentally, emission quantity of aldehyde (total of formaldehyde and acetaldehyde) in terms of formaldehyde was 0.05 µg / g.

### Example 6

An article was prepared by the same method and using the same materials as were used in Reference Example 2 with the exception that 2% of carbohydrazide as an aldehyde scavenger was dissolved into water emulsion type release agent (30 % aqueous solution of RIMRIKEI J860 manufactured by Chukyo Yushi Co., Ltd.) and the mold used was coated with 25 g/m² of the solution as release agent. 40 g of the sample were cut and removed from the article. The aldehyde concentration (formaldehyde and acetaldehyde) was measured by the same procedure and under the same conditions as those used in Reference Example 2. As a result, the detected aldehyde concentration was 0.8 ppm. The emission quantity (as formaldehyde) of aldehyde (total of formaldehyde and acetaldehyde) per 1 g of rigid polyurethane foam article was remarkably reduced to 0.05 µg/g, in comparison with the amount emitted by the foam produced in Comparative Example 2. A 69% reduction was achieved.

### Example 7

A rigid polyurethane foam article was molded by the same procedure used in Reference Example 2 with the exception that the in-mold coating solution included dissolved carbohydrazide as an aldehyde scavenger.

The formulation ratio of the in-mold coating solution was:

| | |
|---|---|
| 5.0% of carbohydrazide dissolved in the main component (Polydur 7-52789 UL446: manufactured by Mikuni Paint Co., Ltd.) | 20 parts |
| Hardener (Polydur DO8-350: manufactured by Mikuni Paint Co., Ltd.) | 10 parts |
| Thinner | 3 parts |

40 g of the sample were cut and removed from the article which was covered by in-mold coating. Aldehyde concentration (formaldehyde and acetaldehyde) was measured by the same procedure and under the same conditions as those used in Reference Example 2. As a result, the detected aldehyde concentration was 0.9 ppm. The emission quantity (as formaldehyde) of aldehyde (total of formaldehyde and acetaldehyde) per 1 g of rigid polyurethane foam article was 0.05 µg/g and the reduction in aldehyde emission as compared to that of the foam of Comparative Example 2 was 66%.

The polyurethane molded articles of the present invention are suitable for use as cushions for furniture, car parts (such as a seat cushion, an armrest, a steering wheel, a change knob, a ceiling material, a door trim, etc.), synthetic wood, and insulation material. Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polyurethane molded article produced by reacting (a) a polyisocyanate component, (b) a polyol component comprising a polyol, a catalyst, a cross linking agent, and (c) from 0.05 to 3.0 parts by weight, based on 100 parts by weight of polyol component, of a hydrazine compound.

2. The polyurethane molded article of Claim 1 in which the hydrazine compound has an equivalent weight of 200 or less.

3. The polyurethane molded article of Claim 1 in which the hydrazine compound is selected from the group consisting of hydrazine hydrate, hydrazine carbonate, phenyl hydrazine, 2-hydroxyethyl hydrazine, carbo(di)hydrazide, acetic acid hydrazide, adipic acid dihydrazide and succinic acid dihydrazide.

4. A process for the production of a polyurethane article in which a polyisocyanate is reacted with a polyol component comprising a polyol, a catalyst, a cross linking agent and from 0.05 to 3.0 parts by weight, based on 100 parts by weight of polyol plus catalyst plus cross linking agent, of a hydrazine compound.

5. A polyurethane molded article coated with a hydrazine compound in an amount of from 0.1 g/m² to 10 g/m² on its surface.

6. The article of Claim 5 comprising:
(a) a polyurethane foam part , and
optionally,
(b) a skin layer on an external surface of the polyurethane foam part,
(c) an adhesive layer and/or
(d) a reinforcement layer
with (c) and/or (d) being positioned between (a) and (b), and
(e) a backing layer positioned on an internal surface of (a),
in which the hydrazine compound is coated on at least one surface selected from the group consisting of external and internal surfaces of (a), (b), (c), (d), and (e).

7. The article of Claim 6 in which the hydrazine has an equivalent weight of 200 or less.

8. The article of Claim 6 in which the hydrazine compound is selected from the group consisting of hydrazine hydrate, hydrazine carbonate, phenyl hydrazine, 2-hydroxyethyl hydrazine, carbo(di)hydrazide, acetic acid hydrazide, adipic acid dihydrazide and succinic acid dihydrazide.

9. A car ceiling produced from the article of Claim 5.

10. A process for the production of the article of Claim 5 in which an aqueous solution containing the hydrazine compound in a concentration of from 0.1 to 10 percent by weight is coated on the surface.

11. A process for the production of the article of Claim 5 in which the article is molded in a mold to which the hydrazine compound and a mold release agent have been applied to the mold surface.

12. A process for the production of the article Claim 5 in which the hydrazine compound is coated on an internal surface of the skin material and/or on the external surface of the backing material, and the coated element is positioned in a mold and cast.

13. A process for the production of the article of Claim 5 in which a polyurethane sheet obtained by slicing a polyurethane slab is sandwiched between reinforcement fibers and the polyurethane sheet is fixed with an adhesive comprising (a) an isocyanate and (b) a mixture comprising a catalyst, water and from 0.1 to 30 parts by weight, based on 100 parts by weight of catalyst plus water, of the hydrazine compound in a heated mold to give a reinforced sandwich-type polyurethane article.

14. A process for the production of the article of Claim 5 in which a lacquer in which from 1 to 10 wt.% of the hydrazine compound is present is applied to a mold surface in a manner such that the lacquer will form a surface layer before the polyurethane article is molded.
